# EUROPÄISCHE PATENTSCHRIFT

(11) **EP 3 612 729 B1**
(45) Veröffentlichungstag und Bekanntmachung des Hinweises auf die Patenterteilung: **22.06.2022**
(21) Anmeldenummer: 18719790.0
(22) Anmeldetag: 13.04.2018
(51) Int. Cl.: F03D 5/00

(54) **SEIL ZUR ORTSFESTEN FIXIERUNG EINES HÖHENWINDKRAFTWERKS**
CABLE FOR THE STATIONARY ATTACHMENT OF A HIGH-ALTITUDE WIND TURBINE
CÂBLE POUR MONTAGE FIXE D'UNE ÉOLIENNE RÉGLABLE EN HAUTEUR

(30) Priorität: 21.04.2017 DE 102017206747
(43) Veröffentlichungstag der Anmeldung: 26.02.2020
(73) Patentinhaber: Sanfritsch GmbH, 72181 Starzach (DE)
(72) Erfinder: WÖLL, Oliver, 72181 Starzach (DE)
(74) Vertreter: Patentanwälte Magenbauer & Kollegen Partnerschaft mbB
(86) Internationale Anmeldenummer: PCT/EP2018/059526
(87) Internationale Veröffentlichungsnummer: WO 2018/192851

(56) Entgegenhaltungen:
- EP-A1- 0 045 202
- GB-A- 2 441 924
- JP-A- H04 350 369
- US-A1- 2009 278 353

## Beschreibung

Die Erfindung betrifft ein Seil zur ortsfesten Fixierung eines Höhenwindkraftwerks, wobei das Seil an einem Erdanker befestigbar ist und an einer Hülle des Höhenwindkraftwerkes angreifen kann .

Es sind Höhenwindkraftwerke bekannt, welche ein Windrad oder einen Rotor beinhalten. Diese sind auch teilweise mit Helium oder einem anderen Gas, welches leichter als Luft ist, gefüllt, so dass sie eine Auftriebswirkung erzielen. Höhenwindkraftwerke werden üblicherweise von einem an der Erde verankerten Seil gehalten (US 2008/0290665 A1).

Die Europäische Patentanmeldung (EP 0 045 202 A1) offenbart Verbesserungen eines Höhenwindkraftwerks, wobei aus einem Polyaramidwerkstoff ausgebildete und von Auftriebskörpern in der Luft gehaltene Seile zur ortsfesten Befestigung des Höhenwindkraftwerks genannt sind.

Weitere Patentanmeldungen offenbaren alle Seile zur ortsfesten Befestigung eines Höhenwindkraftwerks, die mittels Auftriebskörper in der Luft gehalten werden, wobei ein Seilwerkstoff hierbei nicht näher spezifiziert wird (US 2009/0278353 A1, JP H 04350369 A, GB 2441924 A).

Aufgrund der fixen Verbindung mit dem Boden muss das Seil allen Wind- und Wetterverhältnisse standhalten. Weiterhin muss der Energietransport entlang des Seiles erfolgen. Aufgrund der großen Leistung ist es wichtig, das Gewicht des Energietransportmittels zu reduzieren. Im Falle der Weiterleitung von Strom erhitzt sich ein Stromkabel im Betrieb.

Die Erfindung betrifft ein Seil gemäß Anspruch 1. Bevorzugte Ausführungsbeispiele ergeben sich aus den Unteransprüchen .

Als Energieübertragungsvorrichtung des erfindungsgemäßen Seils dient ein Luftschlauch für den Transport von Druckluft, die von Kompressoren im Höhenwindkraftwerk erzeugt wird. An der Erdoberfläche stehen direkt Druckluftspeicher oder Lageenergiespeicher zur Verfügung. Zur Erzeugung von Strom werden die Druckluftspeicher entleert und dadurch ein Generator angetrieben. Der Wirkungsgrad liegt bei ca. 65% inklusive der Speicherung. Erfindungsgemäß ist der Luftschlauch isoliert, nämlich mittels Kryptongas, Aerogelen oder einer Vakuumdämmung. Das Seil oder deren Hülle weist eine aerodynamische Form auf, um dynamische Kräfte zu reduzieren, wohingegen die Energieübertragungsvorrichtung, d.h. der Luftschlauch, eine runde Form besitzt und aufgrund der Druckluft eigenstabil ist.

Die Erfindung betrifft ein Seil für ein Höhenwindkraftwerk, welches am Boden befestigt ist und sich in großen Höhenlagen zwischen 2.000 m und 15.000 m, insbesondere zwischen 8.000 m und 12.000 m (Jetstream) befindet. Das Höhenwindkraftwerk ist dafür ausgelegt, Luftgeschwindigkeiten von 200 bis 500 km/h zu nutzen und eine lange Zeit in derartigen Höhenlagen zu verbleiben. Hierzu besteht die Hülle aus einer reißfesten Oberfläche, um allen Wetterbedingungen standhalten zu können.

Gemäß einem bevorzugten Ausführungsbeispiel der Erfindung ist die Tragvorrichtung von einer Vielzahl von abgeschlossenen Tragkörpern gebildet wird. Vorteilhaft besitzt das Seil eine annähernd komplette Verkleidung, welche die mit einem Trägergas gefüllten Tragkörper aufweist.

Eine Weiterbildung der Erfindung sieht vor, dass die Vielzahl von abgeschlossenen Tragkörpern in Seilrichtung hintereinander und/oder radial nebeneinander und/oder radial ineinander geschachtelt sind. Das Seil besitzt an annähernd der gesamten Oberfläche Trageinheiten, welche dem Seil und der Energietransporteinheit den erforderlichen Auftrieb verleihen. Die Trageinheiten sind fix mit dem Halteseil verbunden.

Dabei ist das Seil flexibel oder biegeschlaff ausgebildet und aus einem allen in der Gebrauchslage vorkommenden Wind- und Wetterverhältnissen beständigen Material, insbesondere Polyaramidwerkstoff, hergestellt. Die Polyaramidwerkstoffe (Kohlefaser) besitzen ein sehr geringes Eigengewicht und eine hohe Zugkraft.

Zum Energietransport ist gemäß einer nicht beanspruchten Ausführung wenigstens ein elektrischer Leiter am Seil befestigt ist. Dabei ist der elektrische Leiter bevorzugt gasisoliert ist und/oder von den Tragkörpern umgeben. Im Gegensatz zu den bekannten gasisolierten Leitern, welche einen nicht flexiblen Aufbau haben, ist die beschriebene Variante flexibel ausgestaltet. Dies wird dadurch erreicht, dass sowohl der innere Kern als auch die äußere Hülle aus flexiblen Materialen bestehen und nicht aus einer fixen Hülle. Zusätzlich ist eine gasdichte Isolierung zwischen den Leitern angebracht, um ein Austreten des Isoliergases zu vermeiden.

Varianten der nicht beanspruchten Ausführung sehen vor, dass der elektrische Leiter ein Stromkabel, ein Supraleiter oder eine Funkenentladungsstrecke ist. Weiterhin dient das Seil nicht nur für die Halterung und Fixierung des Höhenwindkraftwerkes, sondern auch für den Energietransport. Der Energietransport erfolgt bei geringem Gewicht und höchster Energiedichte. Hierzu kann der Energietransport als Supraleiter oder mit einem gasisolierten Leiter oder auch als Faraday'scher Käfig konzipiert sein. Am oberen Ende des elektrischen Leiters ist ein Spannungswandler angebracht, welcher den Strom in eine Funkenentladung umwandelt. Die Funkenentladung wird in einem doppelten Faraday'schen Käfig an die Erdoberfläche geleitet. Hier wird die Funkenentladung wieder in elektrischen Strom umgewandelt.

Bei einer Ausführungsart die nicht beansprucht ist, besteht das Kabel aus einem doppelten Faraday'schen Käfig. Hier wird die Funkenentladung zwischen den beiden Metallen angelegt. Die Metalle sind aus flexiblen, biegeschlaffen Materialien, welche eine Bewegung des Seils zulassen.

Dabei weist die Funkenentladungsstrecke vorteilhaft elektrisch leitende Wände auf und die Wände sind mit Abstand zueinander angeordnet. Die Wände verlaufen röhrenförmig und sind koaxial zueinander angeordnet und werden von einem gasförmigen und/oder festen Isolator getrennt.

Für eine weitere Möglichkeit des gewichtsreduzierten Energietransports werden supraleitende Kabel verwendet. Das supraleitende Kabel wird hierbei am Halteseil befestigt. Die Behälter für die Kühlflüssigkeit für das supraleitende Kabel befinden an den jeweiligen Enden des Kabels.

Gemäß einem nicht beanspruchten Beispiel ist der elektrische Leiter zumindest abschnitts- oder bereichsweise thermisch leitend ausgebildet und weist insbesondere Kühlelemente auf. Zusätzlich besteht die Möglichkeit, dem stromführenden Kabel eine kühlende Außenhaut hinzuzufügen, bei der die kalte Umgebungsluft das Stromkabel kühlt.

Weitere Vorteile, Merkmale und Einzelheiten der Erfindung ergeben sich aus den Unteransprüchen und der nachfolgenden Beschreibung, in der unter Bezugnahme auf die Zeichnung besonders bevorzugte Ausführungsbeispiele der Erfindung beschrieben werden.

In der Zeichnung zeigen:
Figur 1: einen Querschnitt durch eine erste , nicht beanspruchte Ausführungsform mit Seil mit elektrischem Leiter;
Figur 2: eine Seitenansicht des Seils mit elektrischem Leiter gemäß Figur 1;
Figur 3: einen Querschnitt durch eine zweite , nicht beanspruchte Ausführungsform mit Seil mit elektrischem Leiter;
Figur 4: einen Querschnitt durch eine dritte , nicht beanspruchte Ausführungsform mit Seil mit elektrischem Leiter; und
Figur 5: eine Seitenansicht des Seils mit elektrischem Leiter gemäß einer vierten, nicht beanspruchten Ausführungsform.

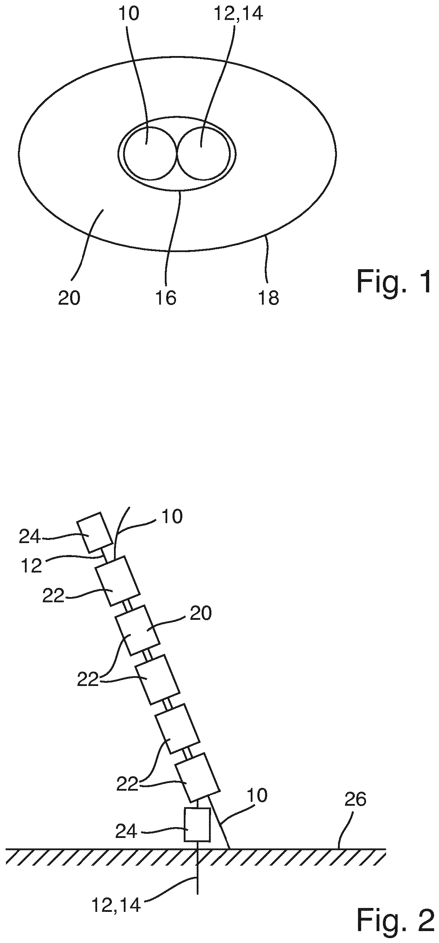

In der Figur 1 ist im Querschnitt ein Halteseil 10 dargestellt, dem ein als Stromkabel 12 ausgeführter elektrischer Leiter 14 benachbart liegt. Das Seil 10 und das Stromkabel 12 werden von einer Halterung 16 zusammengehalten und in axialer und radialer Richtung fixiert. Sowohl das Seil 10 und als auch das Stromkabel 12 bestehen aus deinem biegeschlaffen Material. Das Seil 10 kann auf Zug belastet werden und besteht aus einem Polyaramidmaterial.

Bei einer Ausführungsform der Erfindung ist ebenfalls ein Halteseil vorgesehen, dem jedoch ein Luftschlauch 12 benachbart ist. Mittels dieses Luftschlauches 12 wird Druckluft, die mittels eines oder mehrerer Kompressoren im Höhenwindkraftwerk erzeugt wird, auf die Erdoberfläche geleitet und dort gespeichert oder in eine andere Energieform, z.B. in elektrische Energie umgewandelt.

Das Seil 10 und das Stromkabel 12 einer nicht beanspruchten Ausführung werden von einer Tragvorrichtung 18 umschlossen, die eine gasdichte Hülle aufweist und von einem Trägergas 20 gefüllt ist, das leichter als Luft ist, z.B. Helium. Die Hülle ist so groß, dass das gesamte Gewicht des Seils 10 und des elektrischer Leiters 14 getragen werden kann.

In der Figur 2 ist in der Seitenansicht das Seil 10 mit elektrischem Leiter 14 erkennbar, wobei diese von einer Vielzahl einzelner Trageinheiten 22 umgeben sind. Am oberen Ende des Stromkabels 12 befindet sich ein Spannungswandler 24, der sich im (nicht dargestellten) Höhenwindkraftwerk befindet. Ein weiterer Spannungswandler 24 befindet sich auf der Erdoberfläche 26.

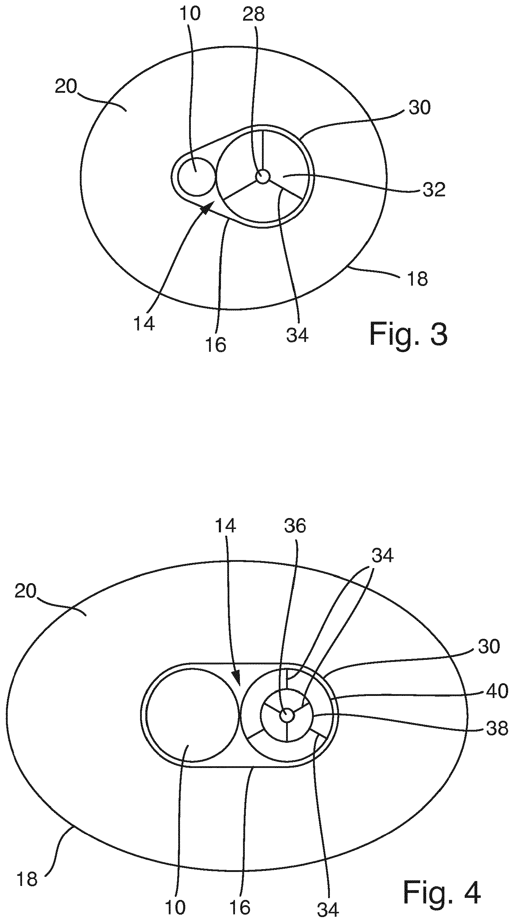

In der Figur 3 ist im Querschnitt einer zweiten Ausführungsform das Seil 10 dargestellt, dem der elektrische Leiter 14 benachbart liegt. Der elektrische Leiter 14, der von einem ersten Leiter 28 und einer diesen biegeschlaff umgebenden Außenschicht 28 gebildet wird, wird von einem Gas 32 angefüllt. Mittels elektrischen Isolatoren 34 werden der erste Leiter 28 und die Außenschicht 28 auf Abstand gehalten. Auch bei diesem Ausführungsbeispiel ist die Tragvorrichtung mit dem Trägergas 20 ausgefüllt.

In der Figur 4 ist im Querschnitt einer dritten Ausführungsform das Seil 10 dargestellt, dem der elektrische Leiter 14 benachbart liegt. Dieser elektrische Leiter 14 wird von einem Kern 36, einem inneren biegeschlaffen Metallring 38 und einem äußeren biegeschlaffen Metallring 40 gebildet. Der Kern 36 und die beiden Metallringe 38 und 40 werden von elektrischen Isolatoren 34 auf Abstand gehalten und erzeugen einen doppelten Faraday'schen Käfig.

Die flexible Hülle des gasisolierten elektrischen Leiters 14 besteht aus mehreren Kabeln, die vom Kern 36 und den Ringen 38 und 40 gebildet werden, welche über die elektrischen Isolatoren 34 miteinander verbunden sind. Anschließend wird der elektrische Leiter 14 mit einem elektrisch nicht leitenden Gas gefüllt. Im nächsten Schritt kann durch den gasisolierten Leiter 14 der Strom transportiert werden.

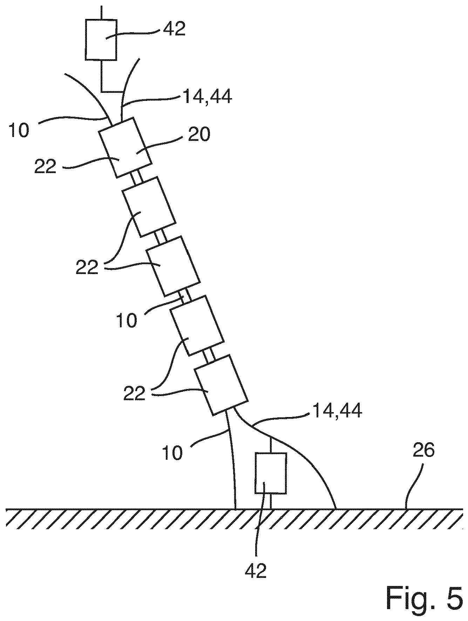

In der Figur 5 ist eine Seitenansicht einer vierten Ausführungsform des Seils 10 mit einem als Supraleiter 44 ausgeführten elektrischen Leiter 14 dargestellt. Der Supraleiter 44 wird von Kühleinheiten 42 gekühlt, die sich auf der Erdoberfläche 26 und im (nicht dargestellten) Höhenwindkraftwerk befinden.

## Patentansprüche

1. Seil (10) mit einer Tragvorrichtung (18) und einer Energieübertragungsvorrichtung, zur ortsfesten Fixierung eines Höhenwindkraftwerks, wobei das Seil (10) an einem Erdanker befestigbar ist und an einer Hülle des Höhenwindkraftwerkes angreifen kann, wobei das Seil (10) einen Polyaramidwerkstoff aufweist und zusätzlich als Träger für die Energieübertragungsvorrichtung ausgebildet ist und selbst von der Tragvorrichtung (18) gehalten werden kann, die ein Trägergas (20) beinhaltet, und wobei die Energieübertragungsvorrichtung von mindestens einem Luftschlauch (12) für Druckluft gebildet ist, **dadurch gekennzeichnet, dass** der mindestens eine Luftschlauch (12) mittels Kryptongas, Aerogelen oder einer Vakuumdämmung isoliert ist.

2. Seil nach Anspruch 1, **dadurch gekennzeichnet, dass** die Tragvorrichtung (18) von einer Vielzahl von abgeschlossenen Trageinheiten (22) gebildet wird.

3. Seil nach Anspruch 2, **dadurch gekennzeichnet, dass** die Vielzahl von abgeschlossenen Trageinheiten (22) in Seilrichtung hintereinander und/oder radial nebeneinander und/oder radial ineinander geschachtelt sind.

4. Seil nach einem der vorhergehenden Ansprüche, **dadurch gekennzeichnet, dass** das Seil (10) flexibel oder biegeschlaff ausgebildet ist und aus einem allen in der Gebrauchslage vorkommenden Wind- und Wetterverhältnissen beständigen Material, insbesondere Polyaramid, hergestellt ist.

5. Seil nach einem der vorhergehenden Ansprüche, **dadurch gekennzeichnet, dass** der mindestens eine Luftschlauch (12) geeignet ist, einen im Höhenwindkraftwerk vorgesehenen Kompressor mit einem Druckluftspeicher auf der Erdoberfläche zu verbinden.

6. Seil nach einem der vorhergehenden Ansprüche, **dadurch gekennzeichnet, dass** die Außenquerschnittsfläche des Seils (10) eine aerodynamische Form aufweist, um dynamische Kräfte zu reduzieren, und die Energieübertragungsvorrichtung, insbesondere die Innenquerschnittsfläche des Luftschlauches (12), eine runde, bevorzugt eine kreisrunde Form besitzt.

## Claims

1. Cable (10), with a carrier device (18) and a power transmission device, for stationary fixing of a high-altitude wind turbine, wherein the cable (10) may be secured to a ground anchor and is able to act on a casing of the high-altitude wind turbine, wherein the cable (10) has an aromatic polyamide material and is also designed as a carrier for the power transmission device and may itself be held by the carrier device (18) which contains a carrier gas (20), and wherein the power transmission device is formed by at least one air hose (12) for compressed air, **characterised in that** the air hose or hoses (12) is or are insulated by means of krypton gas, aerogel or vacuum insulation.

2. Cable according to claim 1, **characterised in that** the carrier device (18) is formed by a multiplicity of closed carrier units (22).

3. Cable according to claim 2, **characterised in that** the multiplicity of closed carrier units (22) are consecutive in the cable direction and/or radially adjacent and/or radially nested in one another.

4. Cable according to any of the preceding claims, **characterised in that** the cable (10) is flexible or slack and made of a material, in particular aromatic polyamide, resistant in the position of use to all occurring wind and weather conditions.

5. Cable according to any of the preceding claims, **characterised in that** the air hose or hoses (12) is or are suitable for connecting a compressor provided in the high-altitude wind turbine to a compressed air reservoir on the ground surface.

6. Cable according to any of the preceding claims, **characterised in that** the outer cross-sectional surface of the cable (10) has an aerodynamic form in order to reduce dynamic forces, and the power transmission device, in particular the inner cross-sectional surface of the air hose (12), has a round, preferably circular form.

## Revendications

1. Câble (10), avec un dispositif support (18) et un dispositif de transmission d'énergie, pour le montage fixe d'une éolienne de vent de haute altitude, dans lequel le câble (10) peut être fixé à un tirant d'ancrage et peut agir sur une enveloppe de l'éolienne de vent de haute altitude, dans lequel le câble (10) présente un matériau de polyaramide et est en outre réalisé en tant que support pour le dispositif de transmission d'énergie et peut être maintenu même par le dispositif support (18) qui contient un gaz porteur (20), et dans lequel le dispositif de transmission d'énergie est formé par au moins un tuyau flexible à air (12) pour de l'air comprimé, **caractérisé en ce que** l'au moins un tuyau flexible à air (12) est isolé au moyen de gaz krypton, d'aérogels ou d'une isolation sous vide.

2. Câble selon la revendication 1, **caractérisé en ce que** le dispositif support (18) est formé par une pluralité d'unités porteuses (22) fermées.

3. Câble selon la revendication 2, **caractérisé en ce que** la pluralité d'unités porteuses (22) fermées sont emboîtées dans le sens du câble les unes derrière les autres et/ou radialement les unes à côté des autres et/ou radialement les unes dans les autres.

4. Câble selon l'une quelconque des revendications précédentes, **caractérisé en ce que** le câble (10) est réalisé de manière flexible ou souple en flexion et est fabriqué en un matériau résistant à toutes les conditions du vent et météorologiques survenant dans la position d'utilisation, en particulier du polyaram ide.

5. Câble selon l'une quelconque des revendications précédentes, **caractérisé en ce que** l'au moins un tuyau flexible à air (12) est approprié afin de relier un compresseur prévu dans l'éolienne de vent de haute altitude à un accumulateur d'air comprimé sur la surface terrestre.

6. Câble selon l'une quelconque des revendications précédentes, **caractérisé en ce que** la superficie de section extérieure du câble (10) présente une forme aérodynamique afin de réduire des forces dynamiques, et le dispositif de transmission d'énergie, en particulier la superficie de section intérieure du tuyau flexible à air (12) possède une forme ronde, de préférence une forme ronde et circulaire.
